# EUROPÄISCHE PATENTSCHRIFT

(11) **EP 1 702 016 B1**
(45) Veröffentlichungstag und Bekanntmachung des Hinweises auf die Patenterteilung: **02.07.2008**
(21) Anmeldenummer: 05700729.6
(22) Anmeldetag: 07.01.2005
(51) Int. Cl.: C09J 4/00, C08F 222/00, C09J 4/06, C08F 259/04, C08F 259/00

(54) **SPALTÜBERBRÜCKENDER CYANACRYLAT-KLEBSTOFF**
GAP-BRIDGING CYANOACRYLATE ADHESIVE
ADHESIF CYANOACRYLATE COLMATANT LES JOINTS

(30) Priorität: 09.01.2004 DE 102004001493
(43) Veröffentlichungstag der Anmeldung: 20.09.2006
(73) Patentinhaber: Henkel AG & Co. KGaA, 40589 Düsseldorf (DE)
(72) Erfinder: BACHON, Thomas, 40597 Düsseldorf (DE); BECK, Horst, 41470 Neuss (DE); LAMBERTZ, Jennifer, 40764 Leverkusen (DE); BEUER, Bernd, 40789 Monheim (DE)
(86) Internationale Anmeldenummer: PCT/EP2005/000070
(87) Internationale Veröffentlichungsnummer: WO 2005/066296

(56) Entgegenhaltungen:
- US-A- 4 444 933

## Beschreibung

Die Erfindung betrifft einen spaltüberbrückenden Cyanacrylat-Klebstoff. Cyanacrylat-Klebstoffe sind grundsätzlich seit langem bekannt. Cyanacrylat-Klebstoffe sind einkomponentige Reaktionsklebstoffe auf der Basis von monomeren 2-Cyanoacrylsäureestern. Sie haben sich den Markt durch ihre äußerst schnelle Aushärtung erobert, die je nach Substrat nur wenige Sekunden erfordert. Die resultierenden Eigenschaften erfüllen viele der in der industriellen Praxis gestellten Anforderungen. Dennoch sind sie in speziellen Anwendungsfällen noch verbesserungsbedürftig.

Insbesondere die Tatsache dass Cyanacrylat-Klebstoffe bislang nicht zur Herstellung spaltüberbrückender Verklebungen eingesetzt werden konnten, hat die Einsatzbereite dieser ansonsten sehr beliebten Klebstoffe stark reduziert. Bislang konnten Cyanacrylat-Klebstoffe überwiegend nur in solchen Fällen eingesetzt werden, in denen die Oberflächen der zu verklebenden Substrate sich im wesentlichen spaltfrei verbinden ließen.

Aus dem Stand der Technik sind Zusammensetzungen bekannt, welche die rheologische Beeinflussung von Cyanacrylatestern durch Zugabe von ihm Ester löslichen Polymeren beschreiben. So wird beispielsweise in der US 4,477,607 eine Zusammensetzung beschrieben, die einen Cyanacrylatester, eine geringe Mengen eines gelösten organischen Polymeren und ein Kieselgel enthält. Hinsichtlich der eingesetzten organischen Polymeren und deren Eigenschaften im Hinblick auf die erforderlichen Molekulargewichte lässt sich der Druckschrift keine Aussage entnehmen.

Die US 3,223,083 betrifft die Verwendung von mit organischen Polymeren verdickten Cyanacrylatestern zur Verklebung von Körpergewebe, beispielsweise zur. Verklebung von Knochen. Zu diesem Zweck wird mittels einem zwei Kammern aufweisenden Applikationen ein Gemisch aus einem mit einem organischen Polymeren verdickten Cyanacrylatester einerseits und einem in Wasser gelösten Protein andererseits in den zu verklebenden Bereich eingebracht.

Die DE 34 00 577 C2 betrifft Cyanacrylat-Klebstoffe, die ein verhältnismäßig geringes Haftvermögen an Haut aufweisen. Entsprechende Cyanacrylat-Klebstoffe enthalten zu diesem Zweck einen Vinylchforid/Vinylacetat-Copolymeres, das nicht weniger als 5 Gew.-% an Vinylacetat aufweist und besten Molekulargewichts mindestens 8000 betragen soll problematisch wirkt sich bei der beschriebenen Zusammensetzung aus, dass die spaltüberbrückenden Eigenschaften aufgrund des Anteils an Vinylacetat nur schlecht ausgeprägt sind. Darüber hinaus zeigt sich, dass die Hydrolysebeständigkeit der so erhaltenen Verklebungen stark zu Wünschen übrig lässt.

Die WO 99/28399 betrifft einen Cyanacrylat-Klebstoff mit einem Ester-Zusatz, wobei als Ester mindestens ein Teil- und/oder Voll-Ester aus ein- oder mehrwertigen aliphatischen Carbonsäuren verwendet wird. Die Druckschrift nennt zwar den Zusatz von verschiedenen Polymeren, über deren Potenzial zur Beeinflussung der spaltfüllenden Eigenschaften wird jedoch keine Aussage getroffen.

Die erfindungsgemäße Aufgabe bestand daher darin, die Nachteile der bekannten Cyanacrylat-Klebstoffe hinsichtlich mangelhafter spaltfüllender Eigenschaften zu vermeiden. Insbesondere bestand die erfindungsgemäße Aufgabe darin, einen Cyanacrylat-Klebstoff mit guter Lagerstabilität, brauchbaren Festigkeiten und praktisch unveränderter Abbindegeschwindigkeit bereitzustellen, der zusätzlich dazu in der Lage ist spaltfüllende Verklebungen zu ermöglichen und darüber hinaus noch eine ausgezeichnete Hydrolysestabilität aufweist.

Es hat sich nun herausgestellt, dass der Zusatz von halogenierten Polymeren mit einem K-Wert von mehr als 46 die spaltfüllenden Eigenschaften eines Cyanacrylat-Klebstoffs deutlich verbessert.

Die der Erfindung zugrunde liegenden Aufgaben werden daher durch Zusammensetzungen gelöst, die mindestens einen Cyanacrylatester und mindestens ein halogenhaltiges organisches Polymeren mit einem K-Wert von mehr als 46 enthalten.

Gegenstand der vorliegenden Erfindung ist daher ein Klebstoff, mindestens enthaltend 50 Gew.-% eines Cyanacrylatesters oder eines Gemischs aus zwei oder mehr Cyanacrylatestern und 5 bis 15 Gew.-% mindestens eines halogenierten Polymeren mit einem K-Wert von mindestens etwa 46.

Cyanacrylat-Klebstoffe basieren im wesentlichen auf Monoacrylsäureestern und/oder Biscyanoacrylaten. Unter "Monocyanoacrylsäureestern" sind Verbindungen der allgemeinen Formel I

H₂C = C(CN)-CO-O-R (I)

zu verstehen, wobei R für eine C₁ bis C₂₄ Alkyl-, Alkenyl-, C₄ bis C₂₄ Cycloalkyl-, Aryl- , Alkoxyalkyl-, Aralkyl- oder Haloalkylgruppe, insbesondere eine Methyl-, Ethyl-, n-Propyl-, iso-Propyl-, n-Butyl-, iso-Butyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxyeutyl- und 2-Ethoxyethylgruppe steht.

Die vorgenannten Cyanoacrylate sind dem Klebstoffachmann bekannt. Hierzu wird hinsichtlich entsprechende Einzelheiten explizit auf Ullmanns's Encyclopaedia of Industrial Chemistry, Bd. A1, S. 240, Verlag Chemie Weinheim (1985) sowie US 3 254 111 A und US 3 654 340 A verwiesen, wobei die Cyanacrylatester und daraus hergestellte Klebstoffe betreffende Offenbarung der genannten Druckschriften als Bestandteil der Offenbarung des vorliegenden Textes verstanden wird.

Bevorzugte Monomere sind die Allyl-, Methoxyethyl-, Ethoxyethyl-, Methyl-, Ethyl-, Propyl-, Isopropyl- oder Butyl-Ester der 2-Cyanoacrylsäure.

Unter "Biscyanoacrylaten" sind Stoffe der allgemeinen Formel II

[H₂C = C(CN)-CO-O]₂R¹ (II)

zu verstehen, worin R¹ für einen verzweigten oder unverzweigten mindestens zweiwertigen Alkylenrest mit 2 bis 18, insbesondere 6 bis 12 C-Atomen, der auch noch Heteroatome wie Halogene und Sauerstoff oder aliphatische oder aromatische Ringe enthalten kann, steht. Vorzugsweise steht R¹ jedoch für einen reinen Kohlenwasserstoff.

Es ist bevorzugt, wenn die Biscyanoacrylate zum Einsatz als Bestandteil einer Klebstoffformulierung besonders rein sind. Biscyanoacrylate mit geeigneter Reinheit lassen sich beispielsweise durch folgende Herstellungs- und Reinigungsmethoden erhalten: Beispielsweise werden Monocyanoacrylate mit Diolen umgeestert und die Reaktionsgemische durch fraktionierte Kristallisation anschließend aufgearbeitet.

Ein geeignetes Verfahren zur Herstellung von Biscyanoacrylaten besteht also darin, dass man 2-Cyanoacrylsäure oder deren Alkylester der allgemeinen Formel III

H₂C = C(CN)-CO-O-R² (III)

worin R² für einen verzweigten oder unverzweigten Alkylrest mit 1 bis 6 C-Atomen steht, mit Diolen der allgemeinen Formel IV

[HO]₂R¹ (IV)

worin R¹ für einen verzweigten oder unverzweigten zweiwertigen Alkylenrest mit 2 bis 18 C-Atomen steht, der auch noch Heteroatome wie Halogene und Sauerstoff oder aliphatische oder aromatische Ringe enthalten kann, zu Biscyanoacrylaten der allgemeinen Formel II umestert und dann das Reaktionsgemisch durch fraktionierte Kristallisation reinigt.

Ein Ausgangsprodukt ist also die monofunktionelle Cyanoacrylsäure oder deren Alkylester gemäß der Formel III. Der Alkylrest sollte nach Möglichkeit so gewählt werden, dass der entstehende Alkohol leicht entfernt werden kann. Die dazu geeigneten Möglichkeiten sind dem Fachmann aus der allgemeinen Umesterungsreaktion bekannt. Vorzugsweise wird der Alkohol destillativ entfernt. Daher steht R² vorzugsweise für einen linearen oder verzweigten Alkoholrest mit 1 bis 6 C-Atomen, vorzugsweise mit einem oder zwei C-Atomen. Der monofunktionelle Cyanoacrylsäureester ist in der Regel, beispielsweise in üblicher Weise, stabilisiert.
Bei den Diolen (Formel IV) handelt es sich um zweiwertige primäre oder sekundäre Alkohole, vorzugsweise um primäre Alkohole. Die Hydroxylgruppen können im wesentlichen beliebig zueinander stehen, vorzugsweise befinden sie sich jedoch endständig an der Kohlenwasserstoffkette. Die Diole weisen 2 bis 18 C-Atome, vorzugsweise 6 bis 12 CAtome auf. Sie können linear, verzweigt oder cyclisch angeordnet sein. Der aliphatische Rest kann auch eine aromatische Gruppe enthalten oder neben den Wasserstoff- und Kohlenstoffatomen auch noch Heteroatome, wie z.B. Chlor- oder Sauerstoff-Atome, vorzugsweise in Form von Polyethylen- oder Polypropylenglykoleinheiten. Als konkrete Diole seien genannt: Hexandiol, Octandiol, Decandiol und Dodecandiol.

Der Cyanoacrylsäureester wird vorzugsweise im Überschuss eingesetzt. Das molare Verhältnis von monofunktionellem Cyanoacrylsäureester zu Diol beträgt beispielsweise mindestens 2,0 : 1,0, vorzugsweise jedoch 2,5 : 1,0, insbesondere 2,2 : 1,0.

Die Umesterung wird durch starke Säuren katalysiert, insbesondere durch Sulfonsäuren, vorzugsweise durch aromatische Sulfonsäuren, wie z.B. p-Toluolsulfonsäure. Aber auch Naphthalinsulfonsäure und Benzolsulfonsäure sowie saure Ionenaustauscher sind möglich. Die Konzentration des Umesterungskatalysators sollte zwischen 1 und 20 Gew.-% liegen, bezogen auf das monofunktionelle Cyanoacrylat.

Die Umesterung erfolgt vorzugsweise in Lösung. Als Lösungsmittel dienen Aromaten und Halogenkohlenwasserstoffe. Bevorzugte Lösungsmittel sind Toluol und Xylol. Die Konzentration der Lösung liegt im Bereich von 10 bis 50, vorzugsweise von 10 bis 20 %.

Der entstehende einwertige Alkohol bzw. das entstehende Wasser werden auf bekannte Art und Weise entfernt, vorzugsweise mit dem Lösungsmittel abdestilliert. Der Umsatz der Umesterung wird z.B. anhand von NMRSpektren kontrolliert. Die Reaktion kann über einen Zeitraum von wenigen Minuten bis hin zu mehreren Stunden ablaufen. Im Falle von Toluol als Lösungsmittel und p-Toluolsulfonsäure als Katalysator ist die Reaktion beispielsweise nach 10 bis 15 Stunden beendet, d.h. es scheidet sich kein Alkohol mehr ab.

Im Falle von sauren Ionenaustauschern als Katalysator können diese zur Aufarbeitung des Reaktionsgemisches einfach abfiltriert werden. Im Falle von löslichen Sulfonsäuren als Katalysator z.B. bei p-Toluolsulfonsäure, wird diese durch Lösungsmittelsubstitution abgetrennt: Toluol wird gegen eine Mischung aus Hexan, Heptan oder Dekan ersetzt. Nach zweimaliger fraktionierter Kristallisation erhält man reines Biscyanoacrylat. Die Reinheit beträgt nach NMRSpektren mehr als 99 %.

Das erhaltene Biscyanoacrylat ist mit den üblichen Stabilisatoren und in den üblichen Konzentrationen lagerstabil, d.h. es verändert bei 20 °C innerhalb von 6 Monaten seinen Schmelzpunkt praktisch nicht.

Die erhaltenen Biscyanoacrylate polymerisieren aber in Gegenwart von Basen sehr schnell, vorzugsweise praktisch gleich schnell wie die entsprechenden Monocyanoacrylate. Wie bei den monofunktionellen Cyanoacrylaten reichen Spuren von Wasser bereits aus. Es entsteht dann ein dreidimensional vernetztes Polymer mit guten thermischen Eigenschaften.

Ein erfindungsgemäßer Klebstoff enthält neben einem Cyanacrylatester oder einem Gemisch aus zwei oder mehr Cyanacrylatestern noch mindestens ein halogenhaltiges organisches Polymeres.
Beispiele für derartige halogenhaltige Polymere sind Polymere des Vinylchlorids, Vinylharze die Vinylchlorideinheiten im Polymerrückgrat enthalten, Copolymere von Vinylchlorid und Estern der Acryl- und Methacrylsäure oder Acrylnitril oder Gemischen aus zwei oder mehr davon, Copolymere des Vinylchlorids mit Dienverbindungen oder ungesättigten Dicarbonsäuren oder deren Anhydriden, beispielsweise Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen Verbindungen wie Acrolein, Crotonaldehyd, Vinylmethylketon, Vinylmethylether, Vinylisobutylether und dergleichen, Polymere und Copolymere des Vinylidenchlorids mit Vinylchlorid und anderen polymerisierbaren Verbindungen, wie sie bereits oben genannt wurden, Polymere des Vinylchloracetats und Dichlordivinylethers, chlorierte Polymere des Vinylacetats, chlorierte polymere Ester der Acrylsäure und der α-substituierten Acrylsäuren, chlorierte Polystyrole, beispielsweise Polydichlorstyrol, chlorierte Polymere des Ethylens, Polymere und nachchlorierte Polymere von Chlorbutadien und deren Copolymere mit Vinylchlorid sowie Mischungen aus zwei oder mehr der genannten Polymeren oder Polymermischungen, die eines oder mehrere der oben genannten Polymere enthalten.

Es ist im Rahmen der vorliegenden Erfindung erforderlich, dass entsprechende halogenhaltige Polymere einen K-Wert (nach Fikentscher) von mindestens etwa 46, vorzugsweise von mindestens etwa 48 aufweisen. Ist erfindungsgemäß besonders bevorzugt, wenn der K-Wert etwa 49 bis etwa 62, insbesondere etwa 50 bis etwa 58 beträgt.

Es ist erfindungsgemäß weiterhin möglich, dass ein Gemisch von halogenhaltigen Polymeren eingesetzt wird, die unterschiedliche K-Werte aufweisen. Ebenfalls geeignet ist dabei ein Gemisch von halogenhaltigen Polymeren, bei denen sich der K-Wert oben mindestens etwa 2, vorzugsweise um mindestens etwa 3 oder mehr, beispielsweise um mindestens etwa 4, 5, 6, 7 oder 8 unterscheidet.

Im Rahmen einer besonders bevorzugten Ausführungsform der vorliegenden Erfindung enthält ein erfindungsgemäßer Klebstoff als organisches halogenhaltiges Polymeres Polyvinylchlorid (PVC) mit einem K-Wert von etwa 50 bis etwa 58. ebenfalls geeignet sind Gemische von Polyvinylchlorid mit unterschiedlichen K-Werten, insbesondere ein Gemisch von Polyvinylchlorid mit einem K-Wert von etwa 50 und einem Polyvinylchlorid mit einem K-Wert von etwa 58.

Ein erfindungsgemäßer Klebstoff enthält etwa 50 bis etwa 99 Gew.-% Cyanacrylatester und mehr als 5 Gew.-% bis etwa 15 Gew.-% an organischen halogenhaltigen Polymeren, wobei der Gehalt an organischen halogenhaltigen Polymeren mit dem erfindungsgemäß erforderlichen K-Wert innerhalb der im Rahmen des vorliegenden Textes genannten Grenzen liegt.

Neben den oben genannten Bestandteilen Cyanacrylatester und organischen halogenhaltigen Polymeren kann ein erfindungsgemäßer Klebstoff noch weitere Additive enthalten, z.B. Weichmacher, Verdicker, Stabilisatoren, Aktivatoren, Farbstoffe und Beschleuniger, z.B. Polyethylenglykol oder Cyclodextrin.

Als Weichmacher eignen sich insbesondere Esterverbindungen. Bei der Alkoholkomponente des Esters handelt es sich vorzugsweise um Alkohole mit 1 bis 5, insbesondere mit 2 bis 4 OH-Gruppen und mit bis 2 bis 5, insbesondere 3 oder 4 direkt miteinander verbundenen C-Atomen. Die Anzahl der nicht direkt miteinander verbundenen C-Atome kann bis zu 110, insbesondere bis zu 18 C-Atomen betragen.

Als Beispiele für einwertige Alkohole seien genannt: Methanol, Ethanol, 1 Propanol, 2-Propanol, 1-Butanol, 2-Butanol, 2,2-Dimethyl-1-propanol, 2-Methyl-1propanol, 2,2-Dimethyl-1-propanol, 2-Methyl-2-propanol, 2-Methyl-1-butanol, 3Methyl-1-butanol, 2-Methyl-2-butanol, 3-Methyl-2-butanol, 1-Pentanol, 2-Pentanol, 3-Pentanol, Cyclopentanol, Cyclopentenol, Glycidol, Tetrahydrofurfurylalkohol, Tetrahydro-2H-pyran-4-ol, 2-Methyl-3-buten-2-ol, 3-Methyl-2-buten-2-ol, 3-Methyl-3-buten-2-ol, 1-Cyclopropyl-ethanol, 1-Penten-3-ol, 3-Penten-2-ol, 4-Penten-1-ol, 4-Penten-2-ol, 3-Pentin-1-ol, 4-Pentin-1-ol, Propargylalkohol, Allylalkohol, Hydroxyaceton, 2-Methyl-3-butin-2-ol.

Als Beispiele für zweiwertige Alkohole seien genannt: 1,2-Ethandiol, 1,2-Propandiol, 1,3-Propandiol, Dihydroxyaceton, Thioglycerin, 2-Methyl-1,3-propandiol, 2-Butin-1,4-diol, 3-Buten-1,2-diol, 2,3-Butandiol, 1,4-Butandiol, 1,3-Butandiol, 1,2-Butandiol, 2-Buten-1,4-diol, 1,2-Cyclopentandiol, 3-Methyl-1,3-butandiol, 2,2-Dimethyl-1,3-propandiol, 4-Cyclopenten-1,3-diol, 1,2-Cyclopentandiol, 2,2-Dimethyl-1,3-propandiol, 1,2-Pentandiol, 2,4-Pentandiol, 1,5-Pentandiol, 4-Cyclopenten-1,3-diol, 2-Methylen-1,3-propandiol, 2,3-Dihydroxy-1,4-dioxan, 2,5-Dihydroxy-1,4-dithian.

Als Beispiele für dreiwertige Alkohole seien genannt: Glycerin, Erythrulose, 1,2,4-Butantriol, Erythrose, Threose, Trimethylolethan, Trimethylolpropan und 2-Hydroxymethyl-1,3-propandiol.

Als Beispiele für vierwertige Alkohole seien genannt: Erythrit, Threit, Pentaerythrit, Arabinose, Ribose, Xylose, Ribulose, Xylulose, Lyxose, Ascorbinsäure, Gluconsäure-γ-lacton.

Als Beispiele für fünfwertige Alkohole seien genannt: Arabit, Adonit, Xylit.

Die oben beschriebenen mehrwertigen Alkohole können beispielsweise auch in veretheter Form eingesetzt werden. Die Ether können zum Beispiel durch Kondensationsreaktionen, Williamson'sche Ethersynthese oder durch Umsetzung mit Alkylenoxiden wie Ethylen-, Propylen- oder Butylenoxid aus den oben genannten Alkoholen hergestellt werden. Als Beispiele seien genannt: Diethylenglykol-, Triethylenglykol, Polyethylenglykol, Diglycerin, Triglycerin, Tetraglycerin, Pentaglycerin, Polyglycerin, technische Gemische der Kondensationsprodukte von Glycerin, Glycerinpropoxylat, Diplycerinpropoxylat, Pentaerythritethoxylat, Dipentaeryrthrit, Ethylenglykolmonobutylether, Propylenglykolmonohexylether, Butyldiglykol, Dipropylenglykolmonomethylether.

Als einwertige Carbonsäuren für die Veresterung mit den oben genannten Alkoholen können beispielsweise verwendet werden: Ameisensäure, Acrylsäure, Essigsäure, Propionsäure, Buttersäure, Isobuttersäure, Valeriansäure, Isovaleriansäure, 2-Oxovalerian-säure, 3-Oxovaleriansäure, Pivalinsäure, Acetessigsäure, Laevulinsäure, 3-Methyl-2-oxo-buttersäure, Propiolsäure, Tetrahydrofuran-2-carbonsäure, Methoxyessigsäure, Dimethoxyessigsäure, 2-(2-Methoxyethoxy)-essigsäure, 2-Methylessigsäure, Brenztraubensäure, 2-Methoxyethanol, Vinylessigsäure, Allylessigsäure, 2-Pentensäure, 3-Pentensäure, Tetrahydrofuran-2-carbonsäure.

Als Beispiele für mehrwertige Carbonsäuren seien genannt: Oxalsäure, Malonsäure, Fumarsäure, Maleinsäure, Bernsteinsäure, Glutarsäure, Acetylendicarbonsäure, Oxalessigsäure, Acetondicarbonsäure, Mesoxalsäure, Citraconsäure, Dimethylmalonsäure, Methylmalonsäure, Ethylmalonsäure.

Auch Hydroxycarbonsäuren können als Ausgangsstoffe verwendet werden, z.B. Tartronsäure, Milchsäure, Äpfelsäure, Weinsäure, Citramalsäure, 2-Hydroxy-valeriansäure, 3-Hydroxyvaleriansäure, 3-Hydroxybuttersäure, 3-Hydroxyglutar-säure, Dihydroxyfumarsäure, 2,2-Dimethyl-3-hydroxy-propionsäure, Dimethylolpropionsäure, Glykolsäure.

Die Veresterung kann entweder vollständig oder partiell erfolgen. Gegebenenfalls können auch Gemische dieser Säuren für die Veresterung verwendet werden.

Die aus diesen Alkoholen und Carbonsäuren bzw. den entsprechenden Derivaten hergestellten erfindungsgemäß zu verwendenden Ester sind vorzugsweise frei von Katalysatoren, insbesondere von Alkalimetallen und Aminen. Dies kann erreicht werden durch Behandlung der erfindungsgemäßen Ester mit Säuren, Ionenaustauschern, essigsauren Tonerden, Aluminiumoxiden, Aktivkohle oder anderen, dem Fachmann bekannten Hilfsmitteln. Zur Trocknung und weiteren Reinigung kann destilliert werden.

Als Beispiele für besonders als Weichmacher geeignete Ester seien genannt: Ethylacetat, Butylacetat, Glycerintriacetat, Glycerintripropionat, Triglycerinpentaacetat, Polyglycerinacetat, Diethylenglykoldiacetat, 3-Hydroxyvaleriansäureethylester, Milchsäurebutylester, Milchsäureisobutylester, 3-Hydroxybuttersäureethylester, Oxalsäurediethylester, Mesoxalsäurediethylester, Äpfelsäuredimethylester, Apfelsäurediisopropylester, Weinsäurediethylester, Weinsäuredipropylester, Weinsäurediisopropylester, Glutarsäuredimethylester, Bernsteinsäuredimethylester, Bernsteinsäurediethylester, Maleinsäurediethylester, Fumarsäurediethylester, Malonsäurediethylester, Acrylsäure-2-hydroxyethylester, 3-Oxovaleriansäuremethylester, Glycerindiacetat, Glycerintributyrat, Glycerintripropionat, Glycerindipropionat, Glycerintriisobutyrat, Glycerindiisobutyrat, Glycidylbutyrat, Acetessigsäurebutylester, Laevulinsäureethylester, 3-Hydroxyglutarsäuredimethylester, Glycerinacetatdipropionat, Glycerindiacetatbutyrat, Propiolsäurebutylester, Propylenglykoldiacetat, Propylenglykoldibutyrat, Diethylenglykoldibutyrat, Trimethylolethantriacetat; Trimethylolpropantriacetat, Trimethylolethantributyrat, Neopentylalkoholdibutyrat, Methoxyessigsäurepentylester, Dimethoxyessigsäurebutylester, Glykolsäurebutylester.

Die genannten Ester werden in einer Menge bis zu 50 Gew.-%, vorzugsweise in einer Menge von 1 bis 30 Gew.-% zugesetzt, bezogen auf den Klebstoff insgesamt. Ab einer Konzentration von 30, insbesondere von 40 Gew.-% zeigen die Polycyanacrylate haftklebrige Eigenschaften.

Weitere geeignete Weichmacher sind beispielsweise Ester wie Abietinsäureester, Adipinsäureester, Azelainsäureester, Benzoesäureester, Buttersäureester, Essigsäureester, Ester höherer Fettsäuren mit etwa 8 bis etwa 44 C-Atomen, Ester OH-Gruppen tragender oder epoxidierter Fettsäuren, Fettsäureester und Fette, Glykolsäureester, Phosphorsäureester, Phthalsäureester, von 1 bis 12 C-Atomen enthaltenden linearen oder verzweigten Alkoholen, Propionsäureester, Sebacinsäureester, Sulfonsäureester, Thiobuttersäureester, Trimellithsäureester, Zitronensäureester, sowie Gemische aus zwei oder mehr davon. Besonders geeignet sind die asymmetrischen Ester der difunktionellen, aliphatischen oder aromatischen Dicarbonsäuren, beispielsweise das Veresterungsprodukt von Adipinsäuremonooctylester mit 2-Ethylhexanol (Edenol DOA, Fa. Cognis, Düsseldorf) oder das Veresterungsprodukt von Phthalsäure mit Butanol.

Ebenfalls als Weichmacher geeignet sind die reinen oder gemischten Ether monofunktioneller, linearer oder verzweigter C₄₋₁₆-Alkohole oder Gemische aus zwei oder mehr verschiedenen Ethern solcher Alkohole, beispielsweise Dioctylether (erhältlich als Cetiol OE, Fa. Cognis , Düsseldorf).

Ebenfalls geeignet sind endgruppenverschlossene Polyethylenglykole eingesetzt. Beispielsweise Polyethylen- oder Polypropylenglykoldi-C₁₋₄-alkylether, insbesondere die Dimethyl- oder Diethylether von Diethylenglykol oder Dipropylenglykol, sowie Gemische aus zwei oder mehr davon.

Als Füllstoffe eignen sich grundsätzlich alle Materialien, welche den Klebstoff einerseits füllen und andererseits die Klebeeigenschaften des Klebstoffes nicht oder nicht mehr als vermeidbar nachteilig beeinflussen. Als Füllstoffe eignen sich insbesondere Kieselgele, insbesondere Oberflächen behandelte Kieselgele. Geeignete Füllstoffe werden beispielsweise in der US 4,477,607 beschrieben. Die Offenbarung dieser Druckschrift im Hinblick auf Füllstoffe in Klebstoffen mit einem Gehalt an Cyanacrylatestern wird als Bestandteil der Offenbarung des vorliegenden Textes betrachtet.

Weitere geeignete Füllstoffe sind beispielsweise Glaspulver, Glasmehl, Glashohlkugeln oder Glasfasern sowie sonstige dem Fachmann bekannte und geeignete anorganischen Füllstoffe.

Der Gehalt an Füllstoffen kann grundsätzlich im wesentlichen beliebig gewählt werden, sofern der erfindungsgemäße Effekt durch den Füllstoffgehalt nicht beeinflusst wird. Besonders geeignet sind jedoch Füllstoffgehalte in einem Bereich von etwa 5 bis etwa 30 oder etwa 10 bis etwa 20 Gew.-%, bezogen auf den gesamten Klebstoff.

Als Verdicker können grundsätzlich alle üblicherweise zur Verdickung von Lösungen mit einem Gehalt an Cyanacrylatestern eingesetzten Verbindungen eingesetzt werden, sofern sie die spaltüberbrückenden Eigenschaften des erfindungsgemäßen Klebstoffes nicht oder nicht mehr als vermeidbar nachteilig beeinflussen. Der Gehalt eines erfindungsgemäßen Klebstoffes an derartigen Verdickern kann beispielsweise etwa 0 bis etwa 10 oder etwa 2 bis etwa 5 Gew.- % betragen.

Als Stabilisatoren eignen sich im Rahmen der vorliegenden Erfindung alle üblicherweise zur Stabilisierung von Cyanacrylatestern gegen radikalische Polymerisation eingesetzten Verbindungen, insbesondere Radikalfänger auf Phenolbasis wie Hydrochinon. Der Gehalt eines erfindungsgemäßen Klebstoffes an solchen Stabilisatoren beträgt vorzugsweise etwa 0 bis etwa 3 Gew.-%, bezogen auf den gesamten Klebstoff.

Als Farbstoffe eignen sich im Rahmen der vorliegenden Erfindung alle üblicherweise zum Anfärben von Cyanacrylatestern enthaltenden Zusammensetzungen eingesetzte Verbindungen, sofern diese die Aushärtung des Klebstoffs und dessen spaltüberbrückende Eigenschaften nicht oder nicht mehr als vermeidbar nachteilig beeinflussen.

Als Beschleuniger eignen sich insbesondere solche Verbindungen, welche das Aushärten des Klebstoffs beschleunigen ohne seine Klebeeigenschaften bzw. seine spaltüberbrückenden Eigenschaften mehr als vermeidbar nachteilig zu beeinflussen. Der Gehalt eines erfindungsgemäßen Klebstoffes an derartigen Beschleunigern beträgt vorzugsweise etwa 0 bis etwa 5 Gew.-%, bezogen auf den gesamten Klebstoff.
Der Klebstoff wird wie üblich durch Mischen der Komponenten hergestellt. Die Lagerstabilität der neuen Klebstoffe lag in allen untersuchten Fällen über 1 Jahr bei Raumtemperatur bzw. über 10 Tage bei 80 °C.

Die Viskosität eines erfindungsgemäßen Klebstoffs liegt vorzugsweise innerhalb eines Bereichs von etwa 500 bis etwa 25.000 mPas (gemessen mit Brookfield RVT, 23°C, Spindel 7, 2,5 Upm).

Die Aushärtungsgeschwindigkeit wird durch die erfindungsgemäß eingesetzten organischen halogenhaltigen Polymeren praktisch nicht beeinträchtigt, d.h. sie wird vorzugsweise nicht verdoppelt, und überschreitet 1 Min. praktisch nicht.

Der erfindungsgemäße neue Cyanacrylat-Klebstoff eignet sich besonders für Verklebungen von insbesondere von Gummi, Metallen, Holz, Keramik, Porzellan, Pappe, Papier, Kork und Kunststoffe außer PE, PP und Teflon und Styropor.

Die Erfindung wird nun anhand von Beispielen im einzelnen erläutert:

### Beispiele:

Um einen möglichst umfassenden Überblick über die Eigenschaften der erfindungsgemäßen Klebstoffe zu erhalten wurden Mischungen aus grundstabilisiertem Reinester und verschiedenen Polymeren hergestellt. Dazu wurde Ethyl-Cyanacrylat unter Feuchtigkeitsausschluss auf 80°C erwärmt und mit verschiedenen organischen Polymeren versetzt. Bei 80-100°C wurden die Polymeren für 10-20 Minuten gelöst bzw. geliert.

Mit den Cyanacrylat-Polymer Mischungen wurden PVC-PVC Verklebungen ohne Spalt und mit Spalt (0,6 mm) hergestellt. Die Zugscherfestigkeiten wurden nach 7 Tagen Lagerung bestimmt.

Außerdem wurden mit den Cyanacrylat-Polymer Mischungen Holz-Holz Verklebungen ohne Spalt und mit Spalt (0,4 mm) hergestellt. Die Verklebungen wurden für 24 h gelagert, anschließend für 6 h in Wasser gekocht und nach weiterer Lagerung in kaltem Wasser für 2 h wurden Zugscherfestigkeiten bestimmt.

Die Ergebnisse sind in der folgenden Tabelle zusammengefasst:

| Nr. : | Mischung: | PVC (0mm) [N/mm²] | PVC (0,6mm) [N/mm²] | Holz (0mm) [N/mm²] | Holz (0,4mm) [N/mm²] |
|---|---|---|---|---|---|
| 1 | Ethyl-CA | 6,5 | 0 | 6,8* | 0 |
| 2 | Ethyl-CA + PVAc (9%) | 6,6 | 2,6 | 7,8 | 0 |
| 3 | Ethyl-CA + PVC (K-Wert=50) (9%) | 14,2 | 4,4 | 8,0 | 4,4 |
| 4 | Ethyl-CA + PVC (K-Wert=50) (4,5%) + PVC (K-Wert=58) (4,5%) | 7,1 | 3,4 | 7,5 | 4,1 |
| 5 | Ethyl-CA + PVC (K-Wert=58) (9%) | 10,5 | 8,9 | 7,1 | 2,7 |

### Schlussfolgerungen/Erklärung:

- Reines CA hat keine spaltfüllenden Eigenschaften (Beispiel 1).
- CA wird durch PVAc angedickt und liefert mäßig gute Festigkeiten, wird jedoch im Spalt schnell hydrolysiert. (Beispiel 2).
- PVC wirkt zusammen mit CA spaltfüllend und ergibt auch nach Behandlung mit kochendem Wasser ausreichende Festigkeiten.

### Herstellung einer Klebstoffformulierung:

75 g Ethyl-Cyanacrylat wurden mit 15 g PVC-Pulver (K-Wert=50) gemischt und ohne Rühren unter Luftausschluss auf 95°C erwärmt. Die warme Mischung wurde für 10 Minuten unter Luftausschluss gerührt und anschließend mit 2 g einer hydrophobierten Kieselsäure versetzt und weitere 5 Minuten gerührt.

Mit dem Klebstoff wurden Holz-Holz Verklebungen hergestellt und die folgenden Eigenschaften bestimmt:

| | | |
|---|---|---|
| Wärmefestigkeit Watt 91 bei 80°C | 10,55 N/mm² | 100% HB |
| Trockenbindefestigkeit EN 204 D1 | 12,08 | 100% HB |
| Nassbindefestigkeit EN 204 D3 | N/mm² 7,52 N/mm² | 100% HB |
| Nassbindefestigkeit EN 204 D4 | 6,37 N/mm² | KB |

Mit dem Klebstoff wurden verschiedene Substrate miteinander verklebt und die Zugscherfestigkeiten wurden nach 2 Tagen Lagerung bestimmt:

| | |
|---|---|
| PVC-PVC | 7,1 N/mm² |
| Buchenholz-Buchenholz | 7,5 N/mm² |
| PMMA-PMMA | 5,5 N/mm² |
| Aluminium-Aluminium | 4,6 N/mm² |
| Messing-Messing | 6,0 N/mm² |

Mit dem Klebstoff wurden PVC-Rohre mittels eines Fittings verklebt und Standzeitversuche bei Raumtemperatur und einem Wasserdruck von 50 bar durchgeführt. Die Verklebungen überdauerten die Testdauer von über 1000 Stunden unbeschädigt.

## Patentansprüche

1. Klebstoff, mindestens enthaltend 50 Gew.-% eines Cyanacrylatesters oder eines Gemischs aus zwei oder mehr Cyanacrylatestern und 5 bis 15 Gew.- % mindestens eines halogenierten Polymeren mit einem K-Wert von mindestens etwa 46.

2. Klebstoff nach Anspruch 1, **dadurch gekennzeichnet, dass** er den Cyanacrylatester in einer Menge von 60 bis 95 Gew.-% enthält.

3. Klebstoff nach einem der Ansprüche 1 oder 2, **dadurch gekennzeichnet, dass** er 7 bis 12 Gew.-% mindestens eines halogenierten Polymeren mit einem K-Wert von mindestens etwa 46 enthält.

4. Klebstoff nach einem der Ansprüche 1 bis 3, **dadurch gekennzeichnet, dass** er mindestens ein organisches halogenhaltiges Polymeres mit einem K-Wert von mindestens 50 enthält.

5. Klebstoff nach einem der Ansprüche 1 bis 3, **dadurch gekennzeichnet, dass** er mindestens ein organisches halogenhaltiges Polymeres mit einem K-Wert von höchstens 58 enthält.

6. Klebstoff nach einem der Ansprüche 1 bis 4, **dadurch gekennzeichnet, dass** er einen Füllstoff enthält.

7. Klebstoff nach einem der Ansprüche 1 bis 6, **dadurch gekennzeichnet, dass** er: Ethyl-, Butyl- oder Methoxyethyl-Cyanoacrylat oder ein Gemisch aus zwei oder mehr davon enthält.

8. Verwendung eines halogenhaltigen organischen Polymeren zur Verbesserung der spaltfüllenden Eigenschaften eines Klebstoffs mindestens enthaltend 50 Gew.-% eines Cyanacrylatesters oder eines Gemischs aus zwei oder mehr Cyanacrylatestern, **dadurch gekennzeichnet, dass** das halogenhaltige organische Polymer ein Gehalt von 5 bis 15 Gew.-% und einen K-Wert von mindestens etwa 46 aufweist.

## Claims

1. An adhesive, containing at least 50 weight % of a cyanoacrylate ester or a mixture of two or more cyanoacrylate esters and 5 to 15 weight % of at least one halogenated polymer with a K-value of at least about 46.

2. The adhesive according to claim 1, **characterized in that** it contains the cyanoacrylate ester in an amount from 60 to 95 weight %.

3. The adhesive according to any of claims 1 or 2, **characterized in that** it contains 7 to 12 weight % of at least one halogenated polymer with a K-value of at least about 46.

4. The adhesive according to any of claims 1 to 3, **characterized in that** it contains at least one organic halogen-containing polymer with a K-value of at least 50.

5. The adhesive according to any of claims 1 to 3, **characterized in that** it contains at least one organic halogen-containing polymer with a K-value of maximum 58.

6. The adhesive according to any of claims 1 to 4, **characterized in that** it contains a filler.

7. The adhesive according to any of claims 1 to 6, **characterized in that** it contains ethyl cyanoacrylate, butyl cyanoacrylate or methoxyethyl cyanoacrylate or a mixture of two or more thereof.

8. The use of a halogen-containing organic polymer for improving the gap-filling properties of an adhesive which contains at least 50 weight % of a cyanoacrylate ester or a mixture of two or more cyanoacrylate esters, **characterized in that** the halogen-containing organic polymer has a content from 5 to 15 weight % and a K-value of at least about 46.

## Revendications

1. Adhésif, contenant au moins 50% en poids d'un ester cyanoacrylate ou d'un mélange de deux esters cyanoacrylate ou plus et 5 à 15% en poids d'au moins un polymère halogéné ayant une valeur K d'au moins environ 46.

2. Adhésif selon la revendication 1, **caractérisé en ce qu'**il contient l'ester cyanoacrylate en une quantité de 60 à 95% en poids.

3. Adhésif selon l'une quelconque des revendications 1 ou 2, **caractérisé en ce qu'**il contient 7 à 12 % en poids d'au moins un polymère halogéné ayant une valeur K d'au moins environ 46.

4. Adhésif selon l'une quelconque des revendications 1 à 3, **caractérisé en ce qu'**il contient au moins un polymère organique halogéné ayant une valeur K d'au moins50.

5. Adhésif selon l'une quelconque des revendications 1 à 3, **caractérisé en ce qu'**il contient au moins un polymère organique halogéné ayant une valeur K d'au plus 58.

6. Adhésif selon l'une quelconque des revendications 1 à 4, **caractérisé en ce qu'**il contient une charge.

7. Adhésif selon l'une quelconque des revendications 1 à 6, **caractérisé en ce qu'**il contient du cyanoacrylate d'éthyle, de butyle ou de méthoxyéthyle ou un mélange de deux ou plusieurs d'entre eux.

8. Utilisation d'un polymère organique halogéné pour améliorer les propriétés de remplissage de fente d'un adhésif contenant au moins 50% en poids d'un ester cyanoacrylate ou d'un mélange de deux esters cyanoacrylate ou plus, **caractérisée en ce que** le polymère organique halogéné présente une teneur de 5 à 15% en poids et une valeur K d'au moins environ 46.
